Europäisches Patentamt

European Patent Office

Office européen des brevets

(19)

(11) Publication number: **0 125 351**
**A1**

(12) # EUROPEAN PATENT APPLICATION

(21) Application number: **83302572.9**

(22) Date of filing: **06.05.83**

(51) Int. Cl.³: **B 60 P 1/08**

(43) Date of publication of application:
**21.11.84 Bulletin 84/47**

(84) Designated Contracting States:
**AT BE CH DE FR GB IT LI LU NL SE**

(71) Applicant: **Zuloaga, Jose Manuel Abascal**
**Valle de Egües, 6**
**Pamplona(ES)**

(72) Inventor: **Zuloaga, Jose Manuel Abascal**
**Valle de Egües, 6**
**Pamplona(ES)**

(74) Representative: **Heath, Derek James et al,**
**Bromhead & Co. 30 Cursitor Street Chancery Lane**
**London EC4A 1LT(GB)**

(54) Improvements to trailers and/or semi-trailers.

(57) The trailer or semi-trailer is constructed with a chassis (1) and an over-frame (9) which are linked together by a fixed pivot and by a travelling slide at their head, there are at least two cylinders (7, 10) operating with fluid under pressure, of which one (10) is the tipping cylinder which links the centre rear of the chassis to the head of the container box (16) mounted on the over-frame (9) so as to cause it to rotate in an arc, and the other is the braking cylinder which links the chassis with the axle on the trailer or semi-trailer and causes travel or locking between the chassis and the over-frame at any one whatsoever of the manifold positions which exist between the horizontal travel position at one extreme, and the maximum tip position at the other.

Fig. 1

EP 0 125 351 A1

IMPROVEMENTS TO TRAILERS AND/OR SEMI-TRAILERS.


The present invention is concerned with a trailer or semi-trailer possessing a tipping system wherewith the container box and a chassis adopt appropriate positions such as to facilitate the loading and unloading operations to be performed, either at ground level or upon a lorry or other vehicle, where tipping can be accomplished even up to 90°, and where the container box is capable moreover of being released from its chassis and from the tractor unit.

With this arrangement, container boxes can be loaded, whilst the trailer or semi-trailer structure when coupled to a tractor, conveys and/or unloads other container boxes.

The present invention also allows these trailers or semi-trailers to adopt such a position that their over-frame, which is joined to the container box, rests at one of its ends upon the ground, whereafter the chassis structure can be raised with respect thereto and describe an arc until it stands at right angles to the ground.

For this it is necessary:

- For the trailer or semi-trailer chassis to be provided with a pivoted and sliding arrangement to enable it respectively to revolve about itself, and to slide upon the chassis.

- For there to be an actuator in the form say of a hydraulic or pneumatic cylinder, which is linked to the container box at its front end, and to the chassis at the opposite end.

- For said container box and its over-frame to be pivotally joined together at their rear end, this being where the latter first rests upon the ground in commencing its rotation up to the maximum amplitude of 90°.

The invention is supplemented by a second hydraulic or pneumatic actuating cylinder which, hereinafter being referred to as the brake cylinder, is located between the chassis and the wheel axle, about which the over frame is pivoted, and where said brake cylinder is able to lock said over-frame and secure it in any one of the manifold positions it is able to adopt with respect to the pivotal axis between the two extreme positions.

Trailers and semi-trailers that are fitted with the tipping system covered by this invention are essentially comprised of a special trailer unit with a particular chassis upon which there is mounted an over-frame, and there are components joining the said chassis and over frame together, and at least two hydraulic or pneumatic cylinders provided respectively for operating and for braking the mechanism. One of these cylinders, this being the operating cylinder, links the chassis to the container box, and the other, this being the braking cylinder, links the chassis to its axis of rotation, and is able to restrain the relative motion between them at any of the manifold positions between the two extreme ones.

In accordance with an additional feature of the present invention, the chassis and the over-frame is complemented at each one of its pivoted joints by a supporting foot which, together with said pivoted joint, the over-frame itself, and a transverse bar, forms an articulated quadrilateral where said feet comprise, at any of the manifold positions up to the 90°tip, the initial support for the subsequent raising of the chassis and wheels of the trailer or semi-trailer.

With the present invention, loading and unloading operations can be performed with one single trailer or semi-trailer as follows:

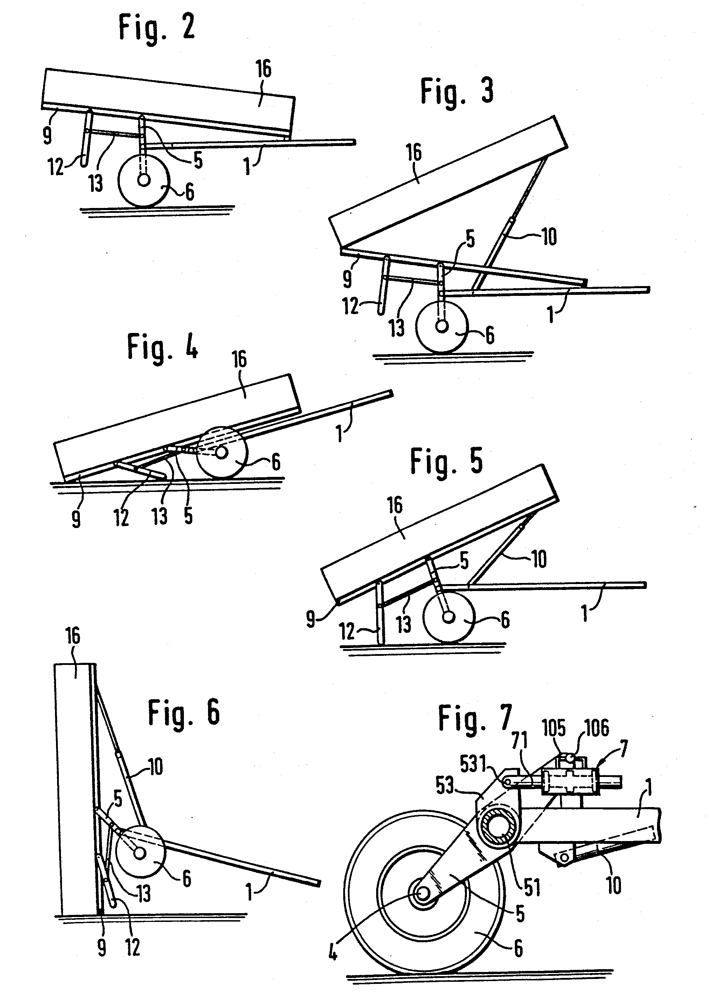

- Upon another vehicle, such as a lorry or another trailer in the transporting position, or upon a pile. (See Figures 2 and 3).

- At ground level (See Figure 4).

- By tipping up to 90° where the container box and the over-frame adopt a position at right angles to the ground (See Figure 6).

../...

In accordance with the present invention, one of the ends of the unit, this being the rear of the over-frame, is pivotally linked together with the container box, and is capable of undergoing with respect to this pivot point, relative angular motion between said container box and the over-frame, whilst at the opposite end, which is the front end, the container box is joined to the end of the above mentioned operating cylinder, the opposite end thereof being linked to the chassis, and furthermore the over-frame possesses a sliding arrangement between itself and the chassis allowing it to undergo travelling motion on a flat plane with respect thereto.

In accordance likewise with the present invention, the over-frame is pivotally linked to the axle carrying the wheels by means of two arms which in turn are pivotally linked to a transverse bar which, together with the very structure of the over-frame and one of the supporting feet, this being pivotally linked to said over-frame and said transverse bar, forms an articulated quadrilateral figure.

With this structuring, all possible relative position variations between the chassis and the over-frame can be achieved by means of the aforementioned set of cylinders, wherein the operating cylinder makes the container box tip with respect to the chassis and, if applicable, with respect to the over-frame, and the brake cylinder which locks the relative motion between the chassis and the over-frame at any position in the range between the two ends, these included, and which respectively correspond to the trailer or semi-trailer transport position, and the ground level loading position, and it is understood that said relative motions can be achieved in a variety of different positions provided always that fixed or moving points in both structures are linked together. The aforegoing preferred description is however given for certain specific positions in order to clarify the description. These specific positions which are adopted by the system covered by the present invention are those wherein the chassis, the over-frame and the container box together take up the anchorage points necessary so that, in a series of motions, they can attain certain positions which are the optimum loading or unloading positions for any specific requirements.

The present construction of the patent obviously includes
all intermediate positions in the range between 0°, which is the
horizontal or travel position, and 90°, which is the tipping or
maximum angle position.

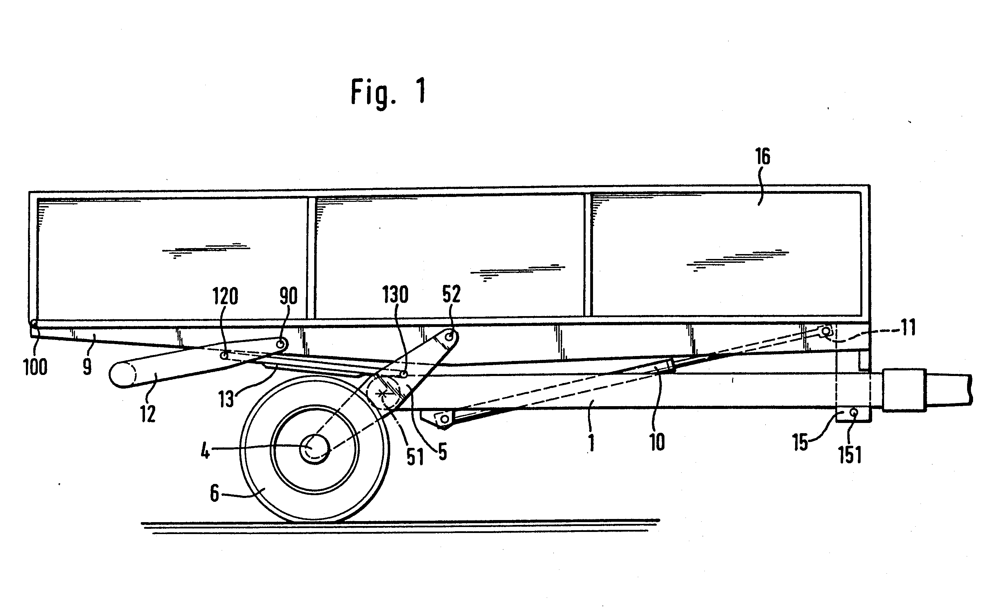

Figure 1 depicts a semi-trailer fitted with the tipping
system covered by the invention, where same is in the travelling,
that is completely horizontal, position, and this figure shows the
pivot (100) between the over-frame (9) and the container box (16),
as well as the assembly upon this container box (16), and specifically on the front end of same, of the operating cylinder (10),
which is linked to the container box (16) in this area by means
of a pivoted attachment head (11).

Figure 2 is a diagrammatic arrangement of a semi-trailer in
position in readiness to raise the box to the right level for
loading or unloading upon or from another vehicle or a pile.

Figure 3 is a diagrammatic arrangement of the container box
(16) is one of its tipping positions once the front end thereof has
been released from the over-frame (9).

Figure 4 is a diagrammatic arrangement of the semi-trailer
covered by the invention in the semi-tipped position ready for the
rear end of the over-frame (9) to touch the ground.

This position allows loading from the ground to be
accomplished, where the chassis (1) and the over-frame (9) are kept
slidingly attached to one another by means of the slide (15) provided
on said over-frame (9).

Figure 5 is a diagrammatic arrangement of the trailer depicted
in the preceding figures, in a position that is intermediate to the
vertical tip, where feet (12) rest upon the ground, and slide (15)
is freed, thus freeing the front end of the over-frame (9) with
respect to chassis (1), and allowing angular motion to take place
between them about axle (4) which carries the wheels (6). This position corresponds to the beginning of the maximum tipping position
at right angles to the ground, and it is at this position where the chassis (1) structure carrying wheels (4) begins to rise.

Figure 6 is a diagrammatic arrangement of the semi-trailer depicted in the preceding figures, in the aforementioned maximum tip position at 90°. To achieve this, it is necessary for the chassis (1) to remain raised with respect to the ground whereupon the end of the over-frame (9) and the container box (16) are now resting.

Figure 7 is an enlargement showing a preferred construction of the brake cylinder (7) mounted in relation to the chassis (1) and axle (4) about which it rotates, and which is capable of restraining the relative motion between them at any position.

The present invention is concerned with a tipping system for trailers or semi-trailers.

In the construction illustrated, the tipping system on a semi-trailer has been included. Nonetheless, this system can perfectly well be applied to a trailer without any alteration at all being made to be essential features of the invention.

In accordance with the construction illustrated, the trailer or semi-trailer tipping system being dealt with here possesses a semi-trailer that is comprised of a chassis (1) provided with a rear axle (4) carrying wheels (6).

Chassis (1) acts as a guide for a slide (15) which is invariably attached to the over-frame (9) structure, and this over-frame (9) in turn carries the container box (16).

The rear axle (4) carrying wheels (6) is pivotally attached to the chassis (1) and the over-frame (9) by means of an arm (5) to points (51) and (52). Point (51) corresponds with the semi-trailer axle, and point (52) is a pivot point between arm (5) and over frame (9).

Each arm (5), of which there are two, where one corresponds to each wheel (6), has another pivot point (130) which links it with an arm (13) whose opposite end is pivoted at (120) to a support (12), which in turn is pivoted at (90) to the over-frame (9).

The over-frame (9) and the container box (16) are in turn pivotally linked together at their rear by means of shaft (100).

This invention is completed with two cylinders or sets of hydro-pneumatic cylinders (7) and (10), of which one (7) is a brake cylinder and is positioned on the chassis (1) where it links the semi-trailer main axle (51) to the over-frame (9) in such a way that it can stop the relative motion between them at any position.

Hydro-pneumatic cylinder (10) is fitted on the chassis (1) and the container box (16) at the front thereof, and is so by means of a pivot (11) on said front, where it can operate or not according to how it is commanded.

In turn, the slide (15) is able to travel in guides with respect to the chassis (1), and either move freely therealong after pin (151) is removed, in which case the over-frame (9) and container box (16) are able to travel in an arc about the chassis (1) through operation of the hydro-pneumatic cylinder (10).

In a practical construction of this invention, which is in accordance with the illustration shown in Figure 7, the plunger (71) in the brake cylinder (7) is linked to the main axle (51) by means of a strip (53), pivoted at (531) to said plunger (71) and invariably linked to axle (51), and said brake cylinder (7) is internally divided into two compartments which are separated from one another by an axially displaceable wall travelling with the plunger (71) itself, and which are in communication with each other through an outside pipe (105) which allows the fluid to flow from one internal compartment to the other at a rate set with a valve (106), wherewith— the speed and/or thrust of this brake cylinder can be adjusted, and the motion stopped at any particular moment.

../...

With this arrangement, the trailer or semi-trailer fitted with the present invention can adopt a plurality of positions ranging between an angle of 0°, which is the travelling position shown in Figure 1, and a position at right angles to the ground, this being the tipping position at 90° as shown in Figure 6. Between these two positions which exist, it is feasible to set the semi-trailer at all the intermediate ones and to stop it at any one of them by operation of the brake cylinder (7). The most commonly used working positions are:

- The travelling position (Figure 1). In this position, the tractor (not shown) coupled to the front of the semi-trailer pulls it forward for travel.

- Raising position, in readiness for tipping onto another vehicle or onto a pile (Figure 2). In this position, arms (5) have rotated with respect to the axle (51) of the semi-trailer, and have raised the over-frame (9) and the associated container box (16) with respect to the chassis (1), for which purpose said over-frame (9) and specifically its slide (15) has withdrawn linearly with respect to the chassis (1). The height of the over-frame (9) at the rear is sufficient to allow tipping or unloading onto another vehicle or onto any kind of pile. In this position, without releasing the chassis (9), it is only necessary to operate the hydro-pneumatic cylinder (10) in order to tip the container box (16) and cause the load to be discharged onto another vehicle or onto a pile (Figure 3).

- "Tipped" position (Figure 4). In this position, where arms (5) have revolved by a larger amount about axle (51), the over-frame (9) rests its rear on the ground, and slide (15) is in the fully withdrawn position with respect to the trailer or semi-trailer chassis (1), with respect to which, it travels linearly. In this position, loading from off the ground is feasible with the minimum amount of effort.

- Initial tip position (Figure 5). In this position, the shaft (151) frees the slide (15) on the chassis (1), and thus causes the over-frame (9) to travel in an arc with respect to the chassis

../...

(1) itself, in the same way as does the container box (16) attached to over-frame (9). The arc travel motion of the over-frame (9) and container box (16) with respect to the chassis (1) as caused by the hydro-pneumatic cylinder (10), after arms (5) have been locked in position with respect to the chassis (1) due to the action of the brake cylinder (7), causes the supporting feet (12) at a first point, to enter into contact with the road surface upon which the semi-trailer wheels (6) are at rest. When the hydro-neumatic cylinder (10) travel continues, the over-frame (9) and the container box (16) go on tipping until the rear of them comes into contact with the ground. Wheels (6) and the chassis (1) are raised off the ground, and the maximum position obtainable in this stage is at right angles to the ground for a 90°tip. (Figure 6).

In the working stages where the over-frame (9) and the container box (16) travel in an arc with respect to the chassis (1), said container box (16) and over-frame (9) are attached together at their front end so that there is no relative motion between them.

In the working stages where the over-frame (9) and the container box (16) have no travel motion in an arc with respect to the chassis (1), said container box (16) and over-frame (9) are attached to the chassis (1) by means of the slide (15) which allows them to travel slidingly with respect to one another.

## C L A I M S

1. Improvements made to trailers and/or semi-trailers peculiar inasmuch that in accordance with same the trailer or semi-trailer is constructed with a chassis and an over-frame which are linked together by a fixed pivot at their centre rear area and by a travelling slide at their head, and wherewith there are at least two cylinders operating with fluid under pressure, of which one is the tipping cylinder which links the centre rear of the chassis to the head of the container box mounted on the over-frame so as to cause it to rotate in an arc, and the other is the braking cylinder which links the chassis with the axle on the trailer or semi-trailer and causes travel or locking between the chassis and the over-frame at any one whatsoever of the manifold positions which exist between the horizontal travel position at one extreme, and the maximum tip position at the other.

2. Improvements made to trailers and/or semi-trailers in full accordance with the first claim above, and peculiar insofar that the container box on the over-frame is pivoted at its rear, whilst the tipping cylinder, which operates hydro-pneumatically, is pivoted to the front end of the container box and linked at this location to the over-frame so that at any given time, the container box can be raised and tipped about its pivot on the over-frame, due to the thrust exerted by the hydro-pneumatic cylinder, while the over-frame remains secured to the chassis by the travelling slide.

3. Improvements made to trailers and/or semi-trailers in full accordance with the first and second claims above, and peculiar inasmuch that the brake cylinder is linked to the chassis, and its plunger is attached to the main axle of the trailer or semi-trailer, while internally, said cylinder is divided into two compartments separated from one another by a wall which is attached to the very plunger, and communicated together by means of an outside cross-over pipe which allows the fluid to flow from one to the other through a regulating valve in such a way that the speed and/or thrusting force can be adjusted, and the regular motion of the chassis and over-frame stopped at any given moment.

../...

4.   Improvements made to trailers and/or semi-trailers in accordance with the first, second and third claims above, and peculiar inasmuch that the pivoted arm is also linked to the over-frame by at least one support and an arm which, together with the aforementioned one and the over-frame, forms an articulated quadrilateral, and inasmuch that the travelling slide between the chassis and the over-frame can be released at a given moment, and, with the container box associated to the over-frame, operate the hydro-pneumatic cylinders in such a way that with two successive stops, firstly on the supports and subsequently on the rear edge of the over-frame and the container box, the unit can tip up at an angle of 90°, perpendicular to the ground.

Fig. 1

0125351

Fig. 2

Fig. 3

Fig. 4

Fig. 5

Fig. 6

Fig. 7

European Patent Office

## DOCUMENTS CONSIDERED TO BE RELEVANT

| Category | Citation of document with indication, where appropriate, of relevant passages | Relevant to claim |
|---|---|---|
| A | US-A-4 317 593  (SARVELA) <br> * Figures 1-3 * | 1,2 |
| | --- | |
| A | DE-A-2 909 070  (SCHMIDT) <br> * Entire document * | 1,3 |
| | --- | |
| A | DE-B-1 127 728  (VIDAL & SOHN) <br> * Figures 1-3 * | 1,3 |
| | --- | |
| A | GB-A-2 075 928   (TRIGG et al.) <br> * Figure * | 1-3 |
| | --- | |
| A | GB-A-2 081 188  (G. NEVILLE TRUCK EQUIPMENT) <br> * Figures 1, 2 * | 1 |
| | --- | |
| A | GB-A-1 369 309  (WAREING & SON) | |
| | --- | |
| A | GB-A-1 092 970  (BUCHER-GUYER) | |
| | --- | |
| A | US-A-3 635 492  (MAULDIN) | |
| | ----- | |

**CLASSIFICATION OF THE APPLICATION (Int. Cl. 3)**

B 60 P    1/08

**TECHNICAL FIELDS SEARCHED (Int. Cl. 3)**

B 60 P    1/00

The present search report has been drawn up for all claims

| Place of search <br> BERLIN | Date of completion of the search <br> 19-12-1983 | Examiner <br> LUDWIG H J |
|---|---|---|